# NOUVEAU FASCICULE DE BREVET EUROPEEN

(11) **EP 2 045 460 B2**
(45) Date de publication et mention de la décision concernant l'opposition: **13.01.2021**
(45) Mention de la délivrance du brevet: 20.09.2017
(21) Numéro de dépôt: 08157970.8
(22) Date de dépôt: 10.06.2008
(51) Int. Cl.: F01D 25/18, F01D 25/16, F02K 3/072

(54) **Turbomachine a double soufflante**
Strömungsmaschine mit Doppelgebläse
Double-fan turbomachine

(30) Priorité: 28.06.2007 FR 0704648
(43) Date de publication de la demande: 08.04.2009
(73) Titulaire: Safran Aircraft Engines, 75015 Paris (FR)
(72) Inventeur: Le Hong, Son, 77810, Thomery (FR); Molinari, Olivier Michaël, 77210, Avon (FR); Servant, Régis Eugène Henri, 91270, Vigneux sur Seine (FR)
(74) Mandataire: Ernest Gutmann - Yves Plasseraud S.A.S.

(56) Documents cités:
- EP-A- 1 365 154
- EP-A- 1 564 397
- EP-A- 1 626 170
- DE-A1- 3 933 776
- DE-A1-102005 018 140
- FR-A- 2 866 073
- GB-A- 2 129 502
- GB-A- 2 194 292
- US-A- 3 903 690
- US-A1- 2004 020 186
- US-B2- 7 614 210

## Description

La présente invention concerne une turbomachine à deux soufflantes contrarotatives et plus particulièrement un arrangement particulier des éléments de liaison des soufflantes à leurs arbres d'entraînement.

Dans les turbomachines connues, intégrant une architecture mécanique à double soufflante, deux roues de soufflante espacées axialement l'une de l'autre sont entraînées en rotation dans des sens contraires par des arbres d'une turbine basse-pression agencée dans la partie aval de la turbomachine.

Chaque arbre de turbine basse-pression est fixé à son extrémité amont à un arbre d'entraînement d'une roue de soufflante. L'arbre d'entraînement de la roue de la soufflante amont est relié à la partie aval de la roue amont, et est entouré par l'arbre d'entraînement de la roue de la soufflante aval, lequel arbre est relié à la partie amont de la roue de la soufflante aval par une paroi de liaison tronconique.

L'arbre d'entraînement de la soufflante aval est guidé à son extrémité amont par un palier amont, qui est situé radialement à l'intérieur de la roue de la soufflante aval, et à son extrémité aval par un palier aval. Ces deux paliers sont reliés par des supports à des carters de la turbomachine. L'extrémité amont de l'arbre de la soufflante amont est reliée à l'extrémité amont de l'arbre de la soufflante aval par un palier amont inter-arbres, son extrémité aval étant reliée à l'extrémité aval de l'arbre de la soufflante aval par un palier aval inter-arbres. Ces deux paliers inter-arbres assurent le centrage de l'arbre d'entraînement de la soufflante amont à l'intérieur de l'arbre d'entraînement de la soufflante aval.

Ce type d'architecture à double soufflante a pour avantage de diminuer les nuisances sonores émises par le moteur du fait de la diminution par un facteur deux de la vitesse de rotation de chacune des deux soufflantes par rapport à un moteur à soufflante unique et permet également d'augmenter le rendement de la turbomachine. Cependant, les turbomachines à soufflantes contrarotatives connues de l'art antérieur présentent plusieurs inconvénients.

En effet, lors du fonctionnement de la turbomachine, le mode de fixation de la roue de la soufflante aval à son arbre d'entraînement ne permet pas de conserver un centrage optimal de la roue sous l'effet de la force centrifuge. De plus, le support du palier amont de guidage de l'arbre de la soufflante aval doit être suffisamment rigide pour supporter notamment les efforts transmis par les roues des soufflantes amont et aval, ce qui impose, du fait de son importante longueur, d'utiliser un support de masse relativement importante.

La superposition du palier amont de guidage et du palier amont inter-arbres implique qu'une modification des dimensions d'un des deux paliers conduit à une modification de géométrie de l'autre palier. De plus, une telle modification est limitée par la proximité du support du palier amont de guidage avec les poireaux d'équilibrage de la roue de la soufflante aval qui s'étendent vers l'intérieur de la turbomachine.

La lubrification des paliers de guidage est assurée par des gicleurs fixés sur les supports de ces paliers. La lubrification des paliers amont et aval inter-arbres ne peut s'effectuer par cette technique car ces paliers sont situés à l'intérieur de deux arbres tournants qui empêchent la fixation de gicleurs.

Une solution consiste à installer une écope centrifuge sur l'arbre d'entraînement de la soufflante aval, alimentée en huile par un gicleur fixé sur le support du palier aval de guidage. L'huile collectée par cette écope passe à travers des orifices de la paroi de l'arbre d'entraînement de la soufflante aval. Sous l'effet de la force centrifuge, cette huile s'écoule le long de la paroi interne tronconique de l'arbre d'entraînement de la soufflante aval, et lubrifie ainsi successivement le palier aval inter-arbres et le palier amont inter-arbres. Cette solution s'avère moins efficace que celle réalisée au moyen de gicleurs car un matelas d'huile peut se former au niveau des paliers inter-arbres, conduisant ainsi les éléments roulants des paliers à glisser plutôt qu'à rouler, ce qui accélère l'usure des roulements des paliers. Cependant cette solution reste intéressante dans le cas d'une turbomachine à double soufflante puisque la vitesse de rotation de chaque soufflante est deux fois moins grande que celle de l'arbre d'une turbomachine mono-soufflante.

L'utilisation de la paroi interne de l'arbre d'entraînement de la soufflante aval pour guider l'huile du palier aval inter-arbres vers le palier amont inter-arbres empêche la réalisation de perçages de ventilation sur cette paroi, ce qui a pour inconvénient de créer une enceinte sensiblement hermétique entre les deux arbres d'entraînement, et conduit à une différence de pression de part et d'autre de la soufflante aval. Des augmentations de température peuvent intervenir dans cette enceinte conduisant également à un échauffement des différentes pièces et de l'huile de lubrification.

Des moyens de déshuilage sont couramment utilisés afin de récupérer une partie de l'huile en suspension dans les espaces situés entre les paliers et limiter ainsi la consommation d'huile du moteur et la pollution atmosphérique. Cependant, la proximité radiale des arbres d'entraînement des soufflantes amont et aval ne permet pas d'utiliser des moyens de déshuilage classiques dans l'enceinte inter-arbres, du type à cheminées radiales fixés sur l'arbre d'entraînement de la soufflante amont, car leur bon fonctionnement nécessite une distance minimale entre l'extrémité libre des cheminées radiales et la paroi interne de l'arbre de la soufflante aval. On a donc recours à des moyens plus complexes, plus coûteux et plus lourds. De plus, l'impossibilité de percer la paroi de l'arbre d'entraînement de la soufflante aval entre les paliers inter-arbres, interdit également la mise en place d'un système de déshuilage entre le support du palier amont de guidage et l'arbre d'entraînement de la soufflante aval.

Le document US2004/0020186A1, décrit une turbomachine à deux soufflantes contrarotatives amont et aval montées en amont d'un compresseur basse pression. La soufflante aval est reliée par sa partie amont à une paroi tronconique dont l'extrémité est fixée à l'extrémité d'un arbre relié à un arbre d'entraînement d'une turbine basse pression.

Le document EP 1365154A2, décrit une turbomachine comprenant deux roues de soufflantes contrarotatives amont et aval, la roue amont étant située en amont d'un compresseur basse pression et la roue aval étant montée autour du compresseur basse pression. Les parties amont et aval de la roue de la soufflante aval sont reliées à une roue mobile du compresseur basse pression qui est elle même reliée intérieurement à un arbre d'entraînement d'une roue de turbine basse pression.

Le document EP 1626170, décrit une turbomachine à deux soufflantes contrarotatives amont et aval montées en amont d'un compresseur basse pression et entraînées par deux arbres contrarotatifs qui relient chacun une roue de soufflante à une roue de turbine basse pression située à l'extrémité aval de la turbomachine. La soufflante aval est reliée à son arbre d'entraînement par sa partie amont.

L'invention a notamment pour but d'apporter une solution simple, économique et efficace à ces problèmes de la technique antérieure.

Le présent document concerne une turbomachine à deux soufflantes contrarotatives amont et aval montées en amont d'un compresseur basse-pression et entraînées par deux arbres coaxiaux contrarotatifs interne et externe reliant chacun une roue de soufflante à au moins une roue de turbine basse pression située à l'aval, caractérisée en ce que la roue de la soufflante aval est reliée par sa partie aval à l'arbre d'entraînement externe.

Selon la présente divulgation, la fixation de l'arbre d'entraînement de la roue de la soufflante aval sur la partie aval de cette roue permet de dégager sous la roue de la soufflante un espace suffisant pour intégrer les poireaux d'équilibrage de la roue de la soufflante aval.

Selon une autre caractéristique, la partie amont de l'arbre de la soufflante aval est guidée en rotation par un palier situé en aval de la roue de la soufflante aval, ce qui permet de réduire la masse et la longueur du support du palier amont de guidage qui est relié à un carter de la turbomachine.

Avantageusement, le diamètre extérieur de ce palier est sensiblement égal au diamètre interne de la roue de la soufflante aval. L'augmentation du diamètre du palier de guidage par rapport à la technique antérieure permet de transmettre au mieux les efforts au support du palier de guidage, tout en conservant des roulements de section similaire à l'art antérieur. La faible vitesse de rotation des soufflantes contrarotatives permet cette modification sans diminuer la durée de vie du roulement.

Selon une autre caractéristique, la partie aval de la roue de la soufflante aval est fixée par des boulons sur un rebord annulaire de la partie amont de son arbre d'entraînement et sur l'extrémité amont d'une paroi tronconique de liaison au rotor d'un compresseur basse-pression de la turbomachine. La double liaison boulonnée à l'aval de la roue de la soufflante aval permet l'équilibrage préalable de l'ensemble du compresseur basse-pression et de la roue de la soufflante aval, avant son montage sur son arbre d'entraînement qui est équilibré indépendamment. La géométrie de cette fixation permet également de conserver un centrage optimal de la roue de la soufflante aval lors du fonctionnement de la turbomachine, malgré les effets de la force centrifuge.

Selon une autre caractéristique de la présente divulgation, la partie amont de l'arbre de la soufflante aval comporte deux parois tronconiques amont et aval reliées entre elles pour former une section en V dont le sommet est orienté radialement vers l'extérieur et porte le palier de guidage de l'arbre. La forme en V permet d'éloigner radialement les deux arbres d'entraînement, ce qui augmente le volume de l'enceinte inter-arbres et permet l'utilisation de moyens de déshuilage classiques du type à cheminées radiales.

Un palier amont inter-arbres est monté entre l'extrémité amont de la paroi tronconique amont de l'arbre de la soufflante aval et l'extrémité amont de l'arbre de la soufflante amont. De même, un palier aval inter-arbres est monté entre les deux arbres coaxiaux des soufflantes, à l'extrémité aval de la paroi tronconique aval de l'arbre de la soufflante aval et comporte des moyens de récupération et de guidage de son huile de lubrification vers des moyens d'amenée d'huile au palier amont inter-arbres.

Dans un mode de réalisation préféré, les moyens d'amenée d'huile au palier amont comprennent une écope centrifuge intégrée à des moyens déshuileurs montés entre les deux arbres et des tubes axiaux diamétralement opposés par rapport à l'axe de la turbomachine, alimentés par l'écope centrifuge et alimentant une écope intégrée à un écrou intérieur du palier amont inter-arbres.

Selon une autre caractéristique, les moyens de récupération de l'huile du palier aval comprennent une jupe cylindrique axiale prolongeant vers l'amont un écrou extérieur du palier aval.

Du fait de la forme en V de la partie amont de l'arbre de la soufflante aval, l'huile ne peut plus parvenir jusqu'au palier amont inter-arbres en s'écoulant sur la paroi interne de l'arbre de la soufflante aval. Pour rétablir l'alimentation en huile du palier amont inter-arbres, l'écrou de fixation extérieur du palier aval inter-arbres à l'arbre d'entraînement aval est muni d'une jupe cylindrique qui permet de guider l'huile qui a traversé le palier aval inter-arbres jusqu'à l'écope centrifuge qui communique avec des tubes débouchant à leurs extrémités amont sur une écope intégrée à un écrou intérieur du palier amont.

La partie amont de l'arbre d'entraînement de la soufflante aval comprend des orifices de ventilation, ce qui permet d'équilibrer les pressions et les températures de part et d'autre de l'arbre d'entraînement de la soufflante aval.

L'extrémité amont de la partie tronconique amont de l'arbre de soufflante aval peut être reliée par un capot tronconique à la partie amont de la roue de la soufflante aval. Ce capot a pour fonction de fermer l'enceinte où circulent l'air et l'huile autour des paliers et de canaliser l'air prélevé dans le compresseur basse-pression vers des systèmes de pressurisation de l'enceinte. Le capot peut être réalisé dans un matériau léger puisqu'il ne participe pas à la tenue mécanique de la soufflante aval.

Selon une autre caractéristique, le capot tronconique est raccordé à son extrémité amont à une paroi annulaire s'étendant radialement vers l'intérieur et dont l'extrémité radialement interne affleure une partie de l'arbre d'entraînement de la soufflante aval située en amont du palier amont, afin de former un système de pressurisation de l'enceinte.

La paroi annulaire comprend avantageusement des orifices de ventilation formés dans son épaisseur, débouchant à l'extrémité radialement interne de la paroi annulaire et dans l'espace situé entre la roue de la soufflante aval et la paroi tronconique amont de l'arbre de la soufflante aval. Un flux d'air peut ainsi s'établir de l'aval vers l'amont à travers ces orifices, ce qui permet d'éviter que l'huile de lubrification du palier amont ne passe en amont du capot tronconique et puisse ainsi s'évacuer dans la veine d'écoulement secondaire où l'air de ventilation de la cabine est prélevé.

L'invention sera mieux comprise et d'autres détails, avantages et caractéristiques de l'invention apparaîtront à la lecture de la description suivante faite à titre d'exemple non limitatif, et en référence aux dessins annexés dans lesquels :
- la figure 1 est une demi-vue schématique partielle en coupe axiale d'une turbomachine à double soufflante selon la technique antérieure ;
- la figure 2 est une demi-vue schématique partielle en coupe axiale d'une turbomachine comportant deux soufflantes amont et aval contrarotatives selon l'invention ;
- la figure 3 est une vue schématique en coupe axiale à plus grande échelle de l'architecture mécanique d'une turbomachine à double soufflante selon l'invention ;
- les figures 4 et 5 sont des vues identiques à la figure 3 illustrant la lubrification des paliers de roulements et la circulation de l'air dans une turbomachine à double soufflante selon l'invention.

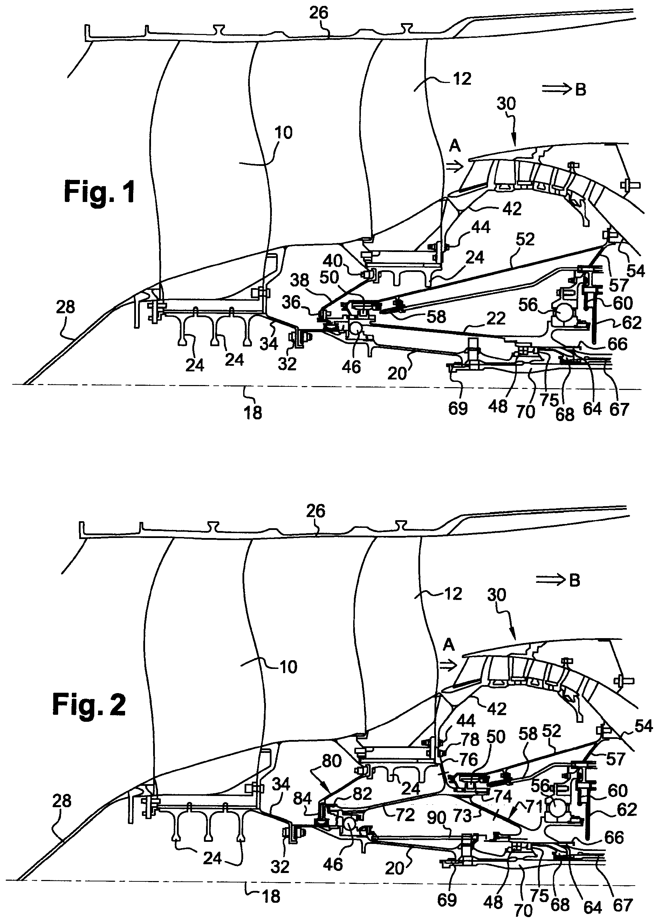

On se réfère tout d'abord à la figure 1 qui représente une partie d'une turbomachine à double soufflante selon la technique antérieure. Une telle turbomachine comporte deux roues de soufflante contrarotatives amont 10 et aval 12, entraînées en rotation autour de l'axe 18 de la turbomachine par deux arbres coaxiaux 20, 22, l'arbre 22 de la soufflante aval entourant l'arbre 20 de la soufflante amont. Chacune des roues de soufflante comprend des poireaux 24 s'étendant radialement vers l'intérieur et permettant un équilibrage des roues 10, 12 en rotation. Les roues de soufflante 10, 12 sont entourées extérieurement par un carter de rétention 26 qui permet de canaliser le flux d'air entrant dans la turbomachine.

Les deux soufflantes amont et aval sont montées en aval d'un cône 28 servant à orienter le flux d'air en entrée de la turbomachine et en amont d'un compresseur 30 basse-pression qui divise le flux d'air en un flux d'air primaire représenté par la flèche A et un flux d'air secondaire représenté par la flèche B.

L'extrémité amont de l'arbre 20 de la soufflante amont est fixée par un système vis/écrou 32 à une paroi tronconique de liaison 34 à la face aval de la roue de la soufflante amont 10. L'extrémité amont de l'arbre 22 de la soufflante aval est fixée par un système vis/écrou 36 à l'extrémité amont d'une paroi tronconique 38 dont la section s'élargit vers l'aval, l'extrémité aval de cette paroi tronconique 38 étant raccordée par un système vis/écrou 40 à la face amont de la roue 12 de la soufflante aval. La partie aval de la roue 12 de la soufflante aval est reliée par une paroi tronconique de liaison 42 au rotor du compresseur basse-pression 30 par un système vis/écrou 44.

L'arbre 20 de la soufflante amont est supporté en rotation par l'arbre 22 de la soufflante aval, par l'intermédiaire d'un palier amont inter-arbres 46 et d'un palier aval inter-arbres 48.

Un palier amont de guidage 50 agencé à l'extrémité amont de l'arbre 22 de la soufflante aval est monté sur une paroi tronconique de support 52 fixée à un carter 54 de la turbomachine. Un palier aval de guidage 56 est intercalé entre l'extrémité aval de l'arbre 22 de la soufflante aval et un support de palier 57 fixé sur le carter 54.

Le palier amont inter-arbres 46 et le palier aval de guidage 56 sont du type à roulements à billes ce qui permet de résister aux charges axiales, tandis que le palier aval inter-arbres 48 et le palier amont de guidage 50 sont du type à rouleaux afin de résister aux charges radiales de la turbomachine.

Un premier gicleur 58 d'huile est fixé sur la face interne de la paroi tronconique de support 52 et permet ainsi de lubrifier le palier amont de guidage 50. Un deuxième gicleur 60 et un troisième gicleur 62 d'huile, fixés sur le support de palier 57, sont disposés sensiblement radialement avec leurs sorties d'huile orientées radialement vers l'intérieur et permettent de lubrifier le palier aval de guidage 56 et le palier aval inter-arbres 48, respectivement.

L'extrémité aval de l'arbre 22 de la soufflante aval comprend des orifices axiaux 64 qui débouchent en amont vers le palier aval inter-arbres 48 et en aval vers une écope centrifuge 66 de récupération de l'huile en provenance du troisième gicleur 62.

L'extrémité aval de l'arbre 22 de la soufflante aval est fixée sur un arbre 67 de turbine basse-pression (non représentée) grâce à un écrou 68 serré sur l'extrémité amont de ce premier arbre 67 de turbine basse-pression. De manière similaire, l'extrémité aval de l'arbre 20 de la soufflante amont est fixée par un écrou de serrage 69 sur un second arbre 70 de turbine basse-pression entouré par le premier arbre 67 de turbine basse-pression. L'écrou 68 comprend une jupe cylindrique axiale qui s'étend vers l'amont et coopère à étanchéité à son extrémité amont avec un joint tournant 75 monté à l'extrémité aval de l'arbre 20 de la soufflante amont, en aval du palier aval inter-arbres 48.

Lors du fonctionnement de la turbomachine, les gaz de combustion entraînent en rotation dans des sens opposés les aubes de turbine et par conséquent les arbres 67, 70. Ainsi les arbres 20, 22 des soufflantes amont et aval tournent dans des sens opposés, ce qui permet de diminuer les nuisances sonores et d'augmenter le rendement par rapport à une turbomachine mono-soufflante.

La lubrification du palier amont inter-arbres 46 est assurée de la manière suivante : l'huile en provenance du troisième gicleur 62 est récupérée par l'écope centrifuge 66 puis traverse les orifices axiaux 64 de l'arbre 22 de la soufflante aval pour alimenter le palier aval 48. Enfin, l'huile s'écoule vers l'amont sur la paroi interne de l'arbre 22 de la soufflante aval sous l'effet de la force centrifuge pour lubrifier le palier amont inter-arbres 46.

Dans ce type d'architecture mécanique, les dimensions du palier amont inter-arbres 46 et du palier amont de guidage 50 ne peuvent être que très légèrement modifiées du fait de la proximité des poireaux d'équilibrage 24 avec le support 52 du palier amont de guidage 50. En outre, il est impossible de former des orifices dans l'arbre de la soufflante aval 22 pour faire circuler l'air prélevé dans le compresseur basse-pression 30 vers l'arbre 20 de la soufflante amont, puisque l'huile de lubrification s'écoule le long de cet arbre. De plus, l'espacement radial entre les deux arbres de soufflante 20, 22 est insuffisant pour permettre l'installation de moyens de déshuilage classiques du type à cheminées radiales.

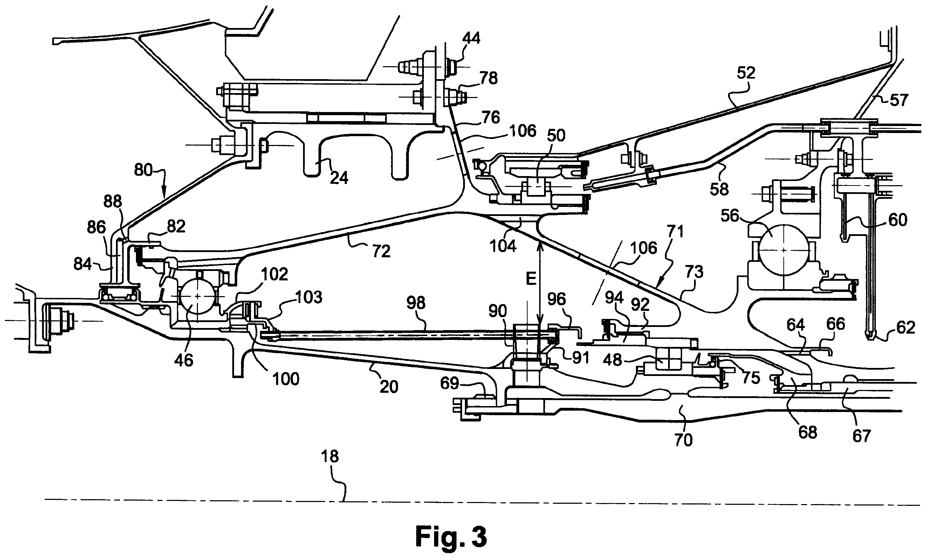

L'invention représentée sur les figures 2 et 3 permet de remédier aux problèmes de ce type d'architecture à double soufflante grâce au fait que la liaison de l'arbre 71 de la soufflante aval avec sa roue 12 est effectuée sur la partie aval de la roue 12. L'arbre 71 de la roue de soufflante aval 12 comporte deux parois tronconiques amont et aval 72, 73 reliées entre elles pour former une section en V. Le sommet du V est orienté radialement vers l'extérieur et comprend une plate-forme cylindrique 74 portant le palier de guidage 50 de l'arbre 71 de la soufflante aval. Un rebord annulaire 76 s'étend depuis le sommet du V et est relié à la face aval de la roue 12 de soufflante aval par un système vis/écrou 78. Cette liaison permet de conserver le centrage de la roue de soufflante aval sous l'effet de la force centrifuge. Une seconde liaison boulonnée 44 relie la face aval de la roue 12 de la soufflante aval à la paroi tronconique 42 du rotor de compresseur basse-pression 30. Cette double liaison permet d'équilibrer dynamiquement l'ensemble roue de soufflante aval 12 / rotor de compresseur basse-pression 30 avant de monter cet ensemble sur l'arbre 71 de la soufflante aval.

L'invention autorise un décalage axial vers l'aval et radial vers l'extérieur du palier amont de guidage 50. Le support de palier 52 peut ainsi être raccourci, ce qui diminue la masse de la turbomachine. Ce nouveau mode de fixation permet également de libérer de l'espace à l'intérieur de la roue 12 de la soufflante aval pour la mise en place des poireaux d'équilibrage 24.

Le palier amont inter-arbres 46 est monté entre l'extrémité amont de la paroi tronconique amont 72 de l'arbre 71 de la soufflante aval et l'extrémité amont de l'arbre 20 de la soufflante amont. De manière similaire, le palier aval inter-arbres 48 est monté entre l'extrémité aval de la paroi tronconique aval 73 de l'arbre 71 de la soufflante aval et l'extrémité aval de l'arbre 20 de la soufflante amont.

Un capot tronconique 80 relie l'extrémité amont de la paroi tronconique amont 72 de l'arbre 71 de la soufflante aval à la face amont de la roue 12 de la soufflante aval. Le capot tronconique 80 est raccordé à son extrémité amont à une paroi cylindrique 82 s'étendant vers l'aval et à une paroi annulaire 84 s'étendant radialement vers l'intérieur. La paroi cylindrique 82 a sa face radialement interne en appui sur l'extrémité amont de la paroi tronconique amont 72 de l'arbre 71 de la soufflante aval. L'extrémité radialement interne de la paroi annulaire 84 affleure une partie de l'arbre 20 de la soufflante amont. La paroi annulaire 84 comprend également une pluralité d'orifices 86 formés dans son épaisseur. Ces orifices débouchent à une extrémité sensiblement perpendiculairement à l'arbre de la soufflante aval et à l'autre extrémité sur des orifices 88 pratiqués depuis la cavité comprise entre la paroi tronconique amont 72 de l'arbre 71 de la soufflante aval et la roue 12 de la soufflante aval. A la différence de la technique antérieure, ce capot 80 ne participe pas à la transmission des efforts lors du fonctionnement de la turbomachine, ce qui permet d'utiliser un matériau léger.

La modification de la géométrie de l'arbre 71 de la soufflante aval permet l'installation de cheminées radiales 90 de déshuilage fixées sur l'arbre 20 de la soufflante amont au moyen d'un anneau 91 et s'étendant entre les deux arbres de soufflante 20, 71. En effet, l'espacement E entre la paroi tronconique aval 73 de l'arbre 71 de la soufflante aval et l'extrémité radialement externe des cheminées 90 est désormais supérieur à la distance minimal, nécessaire au bon fonctionnement de ce type de moyens de déshuilage (figure 3).

Un nouveau mode de circulation de l'huile a été développé puisque la forme en V de l'arbre 71 de la soufflante aval ne permet pas un écoulement de l'huile de lubrification du palier aval inter-arbres 48 jusqu'au palier amont inter-arbres 46. Pour cela, l'extrémité aval de la paroi tronconique aval 73 de l'arbre 71 de la soufflante aval comprend des moyens de récupération de l'huile du palier aval inter-arbres 48. Ces moyens comportent une jupe cylindrique axiale 92 prolongeant vers l'amont l'écrou extérieur de serrage 94 du palier aval inter-arbres 48.

Ces moyens de récupération solidaires de l'arbre 71 de la soufflante aval coopèrent avec des moyens d'amenée de l'huile vers le palier amont inter-arbres 46. Les moyens d'amenée comprennent une écope centrifuge aval 96, intégrée à l'anneau 91 de maintien des cheminées de déshuilage 90, et raccordée à l'amont à deux tubes 98 s'étendant en direction du palier amont inter-arbres 46. Ces tubes 98 orientés axialement ou dans une configuration idéale, légèrement inclinés vers l'extérieur de l'aval vers l'amont afin d'accélérer l'huile sous l'effet de la force centrifuge, sont montés entre les cheminées radiales de déshuilage 90. Les deux tubes 98 sont diamétralement opposés par rapport à l'axe 18 de la turbomachine, afin de ne pas déséquilibrer l'arbre de la soufflante amont 20 lors du fonctionnement de la turbomachine. Une écope centrifuge amont 100 est intégrée à un écrou de fixation intérieur du palier amont inter-arbres 46 et est solidaire de l'arbre 20 de la soufflante amont.

Les tubes 98 sont insérés entre les cheminées 90 et sont montés par emboîtement entre l'anneau 91 de maintien des cheminées 90 et un anneau 103 de maintien. Un anneau 102 permet le freinage de l'écrou intérieur de fixation du palier amont inter-arbres 46, ainsi que le centrage et l'indexage angulaire de l'anneau 103 par rapport à l'arbre de la soufflante amont 20. L'anneau 91 de maintien des cheminées est également indexé angulairement par rapport à l'arbre de la soufflante amont 20. Le double indexage des anneaux 91 et 103 assure le détrompage angulaire et l'installation parallèle des tubes 98.

L'extrémité amont de la paroi tronconique aval 73 comprend des orifices axiaux 104 formés sous la plate-forme 74 et qui débouchent de part et d'autre de la paroi tronconique aval 73.

Le rebord annulaire 76 et la paroi tronconique aval 73 de l'arbre 71 de la soufflante aval comprennent des orifices de ventilation 106.

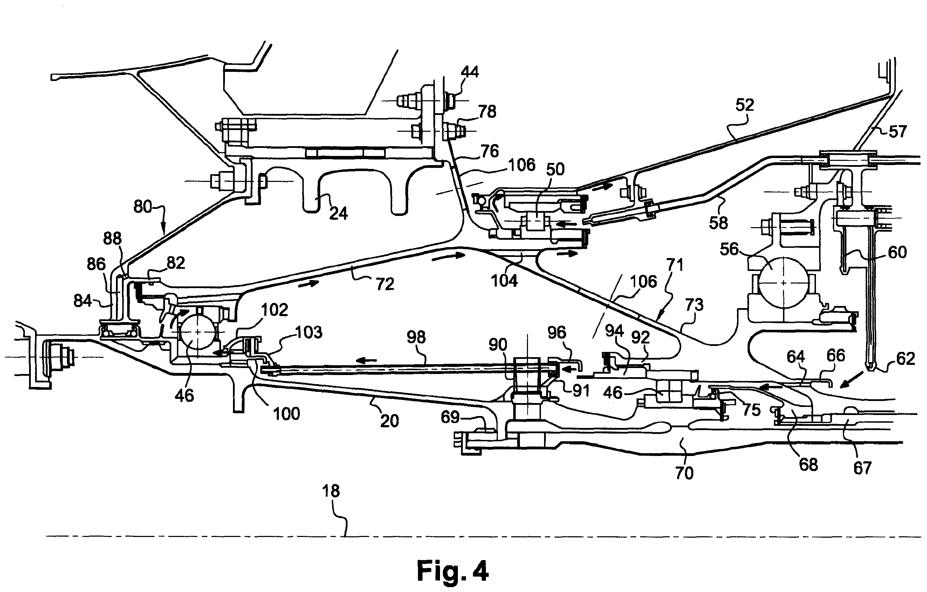

La lubrification des paliers amont et aval inter-arbres 46, 48 s'effectue selon les flèches représentées en figure 4. L'huile est projetée au moyen du troisième gicleur 62 et l'écope 66 de l'arbre 71 de la soufflante aval permet de diriger l'huile à travers les orifices 64 jusqu'au palier aval inter-arbres 48. Sous l'effet de la force centrifuge, l'huile traversant le roulement du palier aval inter-arbres 48 est récupérée et guidée jusqu'à l'extrémité amont de l'écrou de serrage 94 puis est projetée en direction de l'écope aval 96. L'huile passe ensuite dans les tubes 98 jusqu'à l'écope amont 100 qui permet de récupérer l'huile et de l'acheminer jusqu'au palier amont inter-arbres 46. Elle progresse ensuite à travers un réseau de trous et de canaux, jusque dans la bague intérieure du palier amont inter-arbres 46, qui distribue l'huile aux éléments roulants. L'huile projetée en amont du palier amont inter-arbres 46 est récupérée par une écope, qui l'oriente vers un réseau de trous permettant de la renvoyer vers l'aval de ce palier et de rejoindre l'huile qui gicle en aval du palier amont inter-arbres 46. L'huile se propage par la suite vers l'aval sur la surface interne de la paroi tronconique amont 72 de l'arbre 71 de la soufflante aval sous l'effet de la force centrifuge. Elle emprunte ensuite les orifices 104 pratiqués sous la plate-forme 74 puis ruisselle sous l'effet de la gravité sur la paroi interne du support 52 du palier amont de guidage 50.

Pour que les différentes écopes permettent une bonne circulation de l'huile de lubrification, le diamètre intérieur du roulement du palier amont inter-arbres 46 a été augmenté par rapport à la technique antérieure.

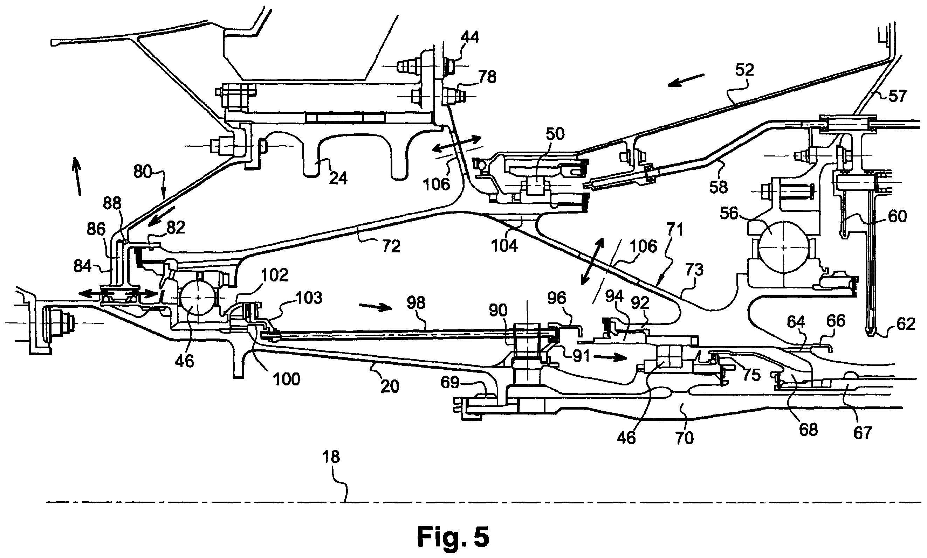

L'invention permet que l'air prélevé depuis le compresseur basse-pression 30 circule jusque vers l'arbre 20 de la soufflante amont à travers les orifices 106 de l'arbre 71 de la soufflante aval, évitant ainsi tout différentiel de pression entre les deux arbres de soufflante (figure 5). Un flux d'air est créé à travers les orifices de pressurisation 88, 86 depuis la cavité située entre la roue 12 de la soufflante aval et la paroi tronconique amont 72 vers l'extrémité radialement interne de la paroi annulaire 84 du capot tronconique 80. Ce flux permet de maintenir, en aval du capot tronconique 80, l'huile de lubrification qui atteint le palier amont 46. On évite ainsi des pertes d'huile en amont du capot 80 qui pourraient être éjectées dans la veine d'écoulement secondaire dans laquelle l'air de ventilation de la cabine est prélevé.

Une double soufflante de turbomachine selon l'invention est assemblée de la manière suivante : l'arbre 71 de la roue 12 de la soufflante aval est assemblé aux paliers de guidage 50 et 56. L'ensemble ainsi formé est fixé à un carter 54 de la turbomachine par l'intermédiaire des supports 52, 57 des paliers de guidage 50 et 56. Le rebord annulaire 76 de l'arbre 71 de la soufflante aval est fixé par boulonnage 78 à la partie aval de la roue 12 de la soufflante aval. L'extrémité aval de l'arbre 71 de la soufflante aval est fixée à l'aide d'un écrou 68 à son arbre 67 de turbine basse-pression. L'arbre 20 de la soufflante amont est inséré avec les paliers de roulements amont 46 et aval 48 à l'intérieur de l'arbre 71 de la soufflante aval et est fixé à son extrémité aval à son arbre 70 de turbine basse-pression grâce à un écrou 69. Enfin, l'extrémité amont de l'arbre 20 de la soufflante amont est fixée à la roue amont 10 et un cône d'entrée 28 est placé en amont de la double soufflante ainsi assemblée.

En variante, le palier amont inter-arbres 46 et le palier aval de guidage 56 sont du type à rouleaux, et le palier aval inter-arbres 48 et le palier amont de guidage 50 sont du type à roulements à billes.

## Revendications

1. Turbomachine à deux soufflantes contrarotatives amont et aval montées en amont d'un compresseur basse-pression et entraînées par deux arbres coaxiaux contrarotatifs interne et externe (20, 71) reliant chacun une roue de soufflante (10, 12) à au moins une roue de turbine basse-pression située à l'aval, **caractérisée en ce que** la roue (12) de la soufflante aval est reliée par sa partie aval à l'arbre d'entraînement externe (71), la partie amont de l'arbre de la soufflante aval comportant deux parois tronconiques amont (72) et aval (73) reliées entre elles pour former une section en V dont le sommet est orienté radialement vers l'extérieur et porte un palier de guidage (50) de l'arbre.

2. Turbomachine selon la revendication 1, **caractérisée en ce que** la partie amont de l'arbre de la soufflante aval est guidée en rotation par le palier (50) qui est situé en aval de la roue (12) de la soufflante aval.

3. Turbomachine selon la revendication 2, **caractérisée en ce que** le diamètre extérieur du palier (50) est sensiblement égal au diamètre interne de la roue (12) de la soufflante aval.

4. Turbomachine selon l'une des revendications 1 à 3, **caractérisée en ce que** la partie aval de la roue (12) de la soufflante aval est fixée par des boulons sur un rebord annulaire (76) de la partie amont de son arbre d'entraînement (71) et sur l'extrémité amont d'une paroi tronconique de liaison (42) au rotor d'un compresseur basse-pression (30) de la turbomachine.

5. Turbomachine selon l'une des revendications 1 à 4, **caractérisée en ce qu'**un palier amont inter-arbres (46) est monté entre l'extrémité amont de la paroi tronconique amont (72) de l'arbre de la soufflante aval (71) et l'extrémité amont de l'arbre (20) de la soufflante amont.

6. Turbomachine selon la revendication 5, **caractérisée en ce qu'**un palier aval inter-arbres (48) est monté entre les deux arbres coaxiaux (20, 71) des soufflantes à l'extrémité aval de la paroi tronconique aval (73) de l'arbre (71) de la soufflante aval et comporte des moyens de récupération et de guidage de son huile de lubrification vers des moyens d'amenée d'huile au palier amont inter-arbres (46).

7. Turbomachine selon la revendication 6, **caractérisée en ce que** les moyens d'amenée d'huile au palier amont comprennent une écope centrifuge (96) intégrée à des moyens déshuileurs montés entre les deux arbres (20, 71) et des tubes axiaux (98) diamétralement opposés par rapport à l'axe de la turbomachine, alimentés par l'écope centrifuge (96) et alimentant une écope intégrée (100) à un écrou intérieur du palier amont inter-arbres (46).

8. Turbomachine selon le revendication 6 ou 7, **caractérisée en ce que** les moyens de récupération de l'huile du palier aval (48) comprennent une jupe cylindrique axiale (92) prolongeant vers l'amont un écrou extérieur (94) du palier aval (48).

9. Turbomachine selon l'une des revendications précédentes, **caractérisée en ce que** la partie amont de l'arbre d'entraînement de la soufflante aval comprend des orifices de ventilation (106).

10. Turbomachine selon l'une des revendications 1 à 9, **caractérisée en ce que** l'extrémité amont de la paroi tronconique amont (72) de l'arbre (71) de la soufflante aval est reliée par un capot tronconique (80) à la partie amont de la roue (12) de la soufflante aval.

11. Turbomachine selon la revendication 10, **caractérisée en ce que** le capot tronconique (80) est raccordé à son extrémité amont à une paroi annulaire (84) s'étendant radialement vers l'intérieur et dont l'extrémité radialement interne affleure une partie de l'arbre d'entraînement de la soufflante aval située en amont du palier amont (46).

12. Turbomachine selon la revendication 11, **caractérisée en ce que** la paroi annulaire (84) comprend des orifices de ventilation formés dans son épaisseur, débouchant à l'extrémité radialement interne de la paroi annulaire (84) et dans l'espace situé entre la roue (12) de la soufflante aval et la paroi tronconique amont (72) de l'arbre (71) de la soufflante aval.

## Patentansprüche

1. Turbomaschine mit zwei gegenläufig rotierenden Gebläsen, einem vorderen und einem hinteren, die einem Niederdruckkompressor vorgelagert sind und über zwei koaxiale, geläufig rotierende Wellen, eine innere und eine äußere (20, 71), angetrieben werden, die jeweils ein Gebläserad (10, 12) mit zumindest einem nachgelagerten Niederdruckturbinenrad verbinden, **dadurch gekennzeichnet, dass** das Rad (12) des hinteren Gebläses an seinem hinteren Abschnitt mit der äußeren Antriebswelle (71) verbunden ist, wobei der vordere Abschnitt der Welle des hinteren Gebläses zwei kegelstumpfförmige Wände, eine vordere (72) und eine hintere (73), enthält, die miteinander verbunden sind, um einen V-förmigen Querschnitt zu bilden, dessen Scheitel radial nach außen gerichtet ist und ein Führungslager (50) der Welle trägt.

2. Turbomaschine nach Anspruch 1, **dadurch gekennzeichnet, dass** der vordere Abschnitt der Welle des hinteren Gebläses über das Lager (50) drehend geführt wird, das dem Rad (12) des hinteren Gebläses nachgelagert ist.

3. Turbomaschine nach Anspruch 2, **dadurch gekennzeichnet, dass** der Außendurchmesser des Lagers (50) im Wesentlichen gleich dem Innendurchmesser des Rades (12) des hinteren Gebläses ist.

4. Turbomaschine nach einem der Ansprüche 1 bis 3, **dadurch gekennzeichnet, dass** der hintere Abschnitt des Rades (12) des hinteren Gebläses über Bolzen an eine ringförmige Randleiste (76) des vorderen Abschnitts ihrer Antriebswelle (71) und an das vordere Ende einer kegelstumpfförmigen Verbindungswand (42) zur Verbindung mit dem Rotor eines Niederdruckkompressors (30) der Turbomachine befestigt ist.

5. Turbomaschine nach einem der Ansprüche 1 bis 4, **dadurch gekennzeichnet, dass** ein vorderes Zwischenwellenlager (46) zwischen dem vorderen Ende der vorderen, kegelstumpfförmigen Wand (72) der Welle des hinteren Gebläses (71) und dem vorderen Ende der Welle (20) des vorderen Gebläses angebracht ist.

6. Turbomachine nach Anspruch 5, **dadurch gekennzeichnet, dass** ein hinteres Zwischenwellenlager (48) zwischen den beiden koaxialen Wellen (20, 71) der Gebläse am hinteren Ende der hinteren, kegelstumpfförmigen Wand (73) der Welle (71) des hinteren Gebläses angebracht ist und Mittel zur Rückgewinnung und Führung seines Schmieröls zu Ölzuführmittel zum Zuführen von Öl zum vorderen Zwischenwellenlager (46) enthält.

7. Turbomachine nach Anspruch 6, **dadurch gekennzeichnet, dass** die Ölzuführmittel zum Zuführen von Öl zum vorderen Lager einen zentrifugalen Wasserabweiser (96) enthalten, der in Ölabscheidemitteln integriert ist, die zwischen den beiden Wellen (20, 71) angebracht sind, sowie axiale Rohre (98), die bezüglich der Achse der Turbomaschine diametral entgegengesetzt sind, über den zentrifugalen Wasserabweiser (96) versorgt werden und einen Wasserabweiser (100) versorgen, der in einer inneren Mutter des vorderen Zwischenwellenlagers (46) integriert ist.

8. Turbomaschine nach Anspruch 6 oder 7, **dadurch gekennzeichnet, dass** die Ölrückgewinnungsmittel des vorderen Lagers (48) eine axial verlaufende, zylindrische Schürze (92) aufweisen, die eine äußere Mutter (94) des hinteren Lagers (48) nach vorne fortsetzt.

9. Turbomaschine nach einem der vorangehenden Ansprüche, **dadurch gekennzeichnet, dass** der vordere Abschnitt der Antriebswelle des hinteren Gebläses Lüftungsöffnungen (106) aufweist.

10. Turbomaschine nach einem der Ansprüche 1 bis 9, **dadurch gekennzeichnet, dass** das vordere Ende der vorderen, kegelstumpfförmigen Wand (72) der Welle (71) des hinteren Gebläses über eine kegelstumpfförmige Haube (80) mit dem vorderen Abschnitt des Rades (12) des hinteren Gebläses verbunden ist.

11. Turbomaschine nach Anspruch 10, **dadurch gekennzeichnet, dass** die kegelstumpfförmige Haube (80) an ihrem vorderen Ende mit einer ringförmigen Wand (84) verbunden ist, die sich radial nach innen erstreckt und deren radial inneres Ende bündig mit einem Abschnitt der Antriebswelle des dem vorderen Lager (46) vorgelagerten, hinteren Gebläses ist.

12. Turbomaschine nach Anspruch 11, **dadurch gekennzeichnet, dass** die ringförmige Wand (84) Lüftungsöffnungen aufweist, die in ihrer Materialstärke ausgeführt sind, am radial inneren Ende der ringförmigen Wand (84) und im Raum zwischen dem Rad (12) des hinteren Gebläses und der vorderen, kegelstumpfförmigen Wand (72) der Welle (71) des hinteren Gebläses ausmünden.

## Claims

1. A twin fan turbomachine with two contrarotating fans, one upstream and one downstream, which are mounted upstream of a low-pressure compressor and driven by two contrarotating coaxial internal and external shafts (20, 71) each of which connects one fan impeller (10, 12) to at least one low-pressure turbine impeller located downstream, wherein the impeller (12) of the downstream fan is connected by its downstream part to the external drive shaft (71), the upstream part of the downstream fan shaft comprising two frustoconical walls, an upstream one (72) and a downstream one (73), joined together to form a V-shaped section the vertex of which is directed radially outward and holds the bearing (50) that guides the shaft.

2. The turbomachine according to claim 1, wherein the upstream part of the shaft of the downstream fan is rotationally guided by the bearing (50) which is situated downstream of the downstream fan impeller (12).

3. The turbomachine according to claim 2, wherein the outside diameter of the bearing (50) is substantially equal to the internal diameter of the downstream fan impeller (12).

4. The turbomachine according to claim 1 to 3, wherein the downstream part of the downstream fan impeller (12) is bolted to an annular rim (76) of the upstream part of its drive shaft (71) and to the upstream end of a frustoconical wall (42) providing the connection to the rotor of a low-pressure compressor (30) of the turbomachine.

5. The turbomachine according to one of claims 1 to 4, wherein an upstream inter-shafts bearing (46) is mounted between the upstream end of the upstream frustoconical wall (72) of the downstream fan shaft (71) and the upstream end of the upstream fan shaft (20).

6. The turbomachine according to claim 5, wherein a downstream inter-shafts bearing (48) is mounted between the two coaxial shafts (20, 71) of the fans at the downstream end of the downstream frustoconical wall (73) of the downstream fan shaft (71) and comprises means of recovering and guiding its lubricating oil to means that supply oil to the upstream inter-shafts bearing (46).

7. The turbomachine according to claim 6, wherein the means of supplying oil to the upstream bearing comprise a centrifugal scoop (96) incorporated into oil separation means mounted between the two shafts (20, 71) and axial tubes (98) that are diametrically opposed with respect to the axis of the turbomachine, supplied by the centrifugal scoop (96) and supplying an incorporated scoop (100) into an internal nut of the upstream inter-shafts bearing (46).

8. The turbomachine according to claim 6 or 7, wherein the means for recovering the oil from the downstream bearing (48) comprise an axial cylindrical skirt (92) extending an external nut (94) of the downstream bearing (48) in the upstream direction.

9. The turbomachine according to any of the preceeding claims , wherein the upstream part of the downstream fan drive shaft comprises ventilation holes (106).

10. The turbomachine according to one of the claims 1 to 9, wherein the upstream end of the upstream frustoconical wall (72) of the downstream fan shaft (71) is connected by a frustoconical cap (80) to the upstream part of the downstream fan impeller (12).

11. The turbomachine according to claim 10, wherein the frustoconical cap (80) is connected at its upstream end to an annular wall (84) extending radially inward and the radially internal end of which lies flush with part of the downstream fan drive shaft located upstream of the upstream bearing (46).

12. The turbomachine according to claim 11, wherein the annular wall (84) comprises ventilation holes formed in its thickness, open at the radially internal end of the annular wall (84) and into the space that lies between the downstream fan impeller (12) and the upstream frustoconical wall (72) of the downstream fan shaft (71).
